# EUROPÄISCHE PATENTANMELDUNG

(11) **EP 1 800 857 A1**
(43) Veröffentlichungstag der Anmeldung: **27.06.2007**
(21) Anmeldenummer: 05405715.3
(22) Anmeldetag: 21.12.2005
(51) Int. Cl.: B32B 27/08, B32B 27/18, B65D 77/20, C09J 7/02

(54) **Vorhangbeschichtungsverfahren**

(71) Anmelder: Alcan Technology & Management Ltd., 8212 Neuhausen am Rheinfall (CH)
(72) Erfinder: Nägeli, Hans R., 8212 Neuhausen am Rheinfall (CH)

(57) **Zusammenfassung**

Bei einem Verfahren zur Herstellung eines Laminates (48) aus zwei über Klebstoffschichten (34, 38) miteinander verbundenen folienförmigen Substraten (44, 46) als Aussenschichten und wenigstens einer funktionellen Zwischenschicht (36) wird ein erstes Substrat (44) über eine Flüssigfilm-Beschichtung mittels Vorhangguss oder Gleitbeschichtung mit einem mehrschichtigen, wenigstens zwei aussenliegende Klebstoffschichten (34, 38) und wenigstens eine funktionelle Zwischenschicht (36) sowie optional wenigstens eine weitere Zwischenschicht (35, 37) umfassenden Flüssigfilm beschichtet und nachfolgend mit dem zweiten Substrat (46) verbunden. Das Verfahren ermöglicht auf einfache und kostengünstige Weise die Herstellung von Laminaten mit Barriereeigenschaften.

## Beschreibung

Die Erfindung betrifft ein Verfahren zur Herstellung eines Laminates aus zwei über Klebstoffschichten miteinander verbundenen folienförmigen Substraten als Aussenschichten und wenigstens einer funktionellen Zwischenschicht.

Die heutige Kaschiertechnologie bei der Verpackungsherstellung basiert auf mittels Rollenbeschichtung aufgebrachten Einzelschichten. Bei der Herstellung von Laminaten mit Barriereschichten sind drei oder mehr Schichten miteinander zu verkleben. Hierzu ist eine entsprechende Anzahl Klebstoff-Auftragstationen erforderlich. Optimale Klebstoffschichten erfordern oft teure Formulierungen. Gegebenenfalls müssen zur Erzielung einer optimalen Haftung zusätzliche Primer eingesetzt werden, die entweder separate Maschinendurchgänge oder zusätzliche Auftragsstationen benötigen.

Zur Herstellung mehrschichtiger fotografischer Filme und Papiere wird seit Jahrzehnten ein unter dem Begriff "Curtain Coating" oder "Vorhangguss" bekannt gewordenes Flüssigfilm-Beschichtungsverfahren eingesetzt. Bei diesem Beschichtungsverfahren werden gleichzeitig mehrere Schichten aus einer Schlitzdüse in einem frei fallenden Vorhang auf eine laufende Materialbahn aufgetragen.

Es ist auch schon vorgeschlagen worden, die Vorhanggusstechnologie zur Beschichtung von Papier und zur Herstellung von Kunststoffverbundmaterialien einzusetzen.

In der WO-A-0154828 ist ein Verfahren zur Herstellung eines mehrschichtigen Verpackungslaminates mit wenigstens zwei übereinander liegenden Schichten offenbart, bei welchem Verfahren zwei oder mehr Schichten mittels Vorhangguss auf ein Substrat aus einem gegebenenfalls bereits beschichteten Papier, Karton oder Kunststofffilm flüssig aufgetragen und nachfolgend getrocknet werden. Die Flüssigfilm-Beschichtungen umfassen Klebstoffschichten, Barriereschichten, Zwischenschichten als Abstandshalter, Sauerstoff-Scavenger-Schichten und Heisssiegelschichten.

Aus der US-B-6 845 599 ist ein zur Vorhanggusstechnologie alternatives Flüssigfilm-Beschichtungsverfahren unter der Bezeichnung "Slide Coating", nachfolgend "Gleitbeschichtung" genannt, bekannt. Bei diesem Beschichtungsverfahren werden gleichzeitig mehrere Schichten aus einer Schlitzdüse von einer Düsengleitfläche direkt auf ein an der Ablaufkante der Düsengleitfläche vorbeigeführtes Substrat aufgetragen.

Der Erfindung liegt die Aufgabe zugrunde, ein Verfahren der eingangs genannten Art zu schaffen, mit welchem Laminate mit funktionellen Zwischenschichten, wie z. B. Barriereschichten, einfach und kostengünstig hergestellt werden können.

Zur erfindungsgemässen Lösung der Aufgabe führt, dass ein erstes Substrat über eine Flüssigfilm-Beschichtung mittels Vorhangguss oder Gleitbeschichtung mit einem mehrschichtigen, wenigstens zwei aussenliegende Klebstoffschichten und wenigstens eine funktionelle Zwischenschicht sowie optional wenigstens eine weitere Zwischenschicht umfassenden Flüssigfilm beschichtet und nachfolgend mit dem zweiten Substrat verbunden wird.

Bevorzugt weisen funktionelle Zwischenschichten wenigstens eine Barriereeigenschaft ausgewählt aus der Gruppe der Diffusionsdurchtrittshemmung für Sauerstoff, Kohlendioxid, Aromastoffe und/oder Wasserdampf, der Transmissionshemmung für UV-Strahlen und der Scavengerfunktion zur Absorption von Sauerstoff, Wasserdampf und Aromastoffen auf.

Funktionellen Zwischenschichten mit Barrierewirkung gegen den Durchtritt von Sauerstoff, Kohlendioxid, Aromastoffen und/oder Wasserdampf sind beispielsweise auf der Basis von Polyvinylalkohol (PVOH), Ethylen-Vinyl-Alkohol (EVOH), vernetzenden Acrylaten, Polyamiden, PVDC (Polyvinylidenchlorid), Epoxy-Amin, Fluorpolymer Nanocomposites und/oder Schichtsilikaten aufgebaut.

Funktionellen Zwischenschichten mit Barrierewirkung gegen die Durchlässigkeit von UV-Strahlen enthalten beispielsweise organische Absorber oder anorganische Partikel.

Funktionellen Zwischenschichten mit Scavengerfunktion enthalten z. B. anorganische oder organische Füllstoffe oder Molekularsiebe als Absorbermaterial. Anorganische Füllstoffe sind beispielsweise Partikel aus Oxiden der Gruppe der Alkali- und Erdalkalimetalle , wie z. B. Calciumoxid (CaO).

Bevorzugt ist jede der Klebstoffschichten auf die Oberfläche des jeweils angrenzenden Substrats funktionell optimiert. Die spezifisch auf ein bestimmtes Substrat angepassten Klebstoffformulierungen sind oft kostspielige Produkte. Aus diesem Grund kann in gewissen Fällen ein Flüssigfilm erforderlich sein, der neben den Klebstoffschichten wenigstens eine Zwischenschicht als zusätzliches Schichtvolumen aufweist, wobei die Dicke der Klebstoffschichten geringer ist als die Dicke der Zwischenschichten. Die Dicke der Klebstoffschichten beträgt zweckmässigerweise etwa 1 bis 30 %, vorzugsweise 1 bis 10 % der Dicke der Zwischenschichten.

Bevorzugt bestehen die Zwischenschicht aus einem kostengünstigen Material, wie z. B. einem Klebstoff auf Urethanbasis, insbesondere aus einem Standard Urethan-Klebstoff, wie z.B aromatischen oder aliphatischen Isocyanaten.

Die Klebstoffschichten können beispielsweise aus Klebstoffen auf Urethanbasis, beispielsweise Polyether-, Polyester- oder Polybutadienpolyole, Acrylat- oder Epoxybasis oder aus Kombinationen der genannten Klebstoffe zusammengesetzt sein.

Die Schichten des Flüssigfilms können lösemittelbasiert, lösemittelfrei oder wasserbasiert sein. Lösemittelfreie Beschichtungsfluide werden bevorzugt, da bei diesen der übliche Trocknungsschritt entfällt.

Als Substrate können Kunststofffilme aus beispielsweise Polyethylenterephthalat (PET), Polyethylen (PP), Polypropylen (PP), Polyamid (PA), Papier oder eine Kombination aus wenigstens zwei der vorstehend genannten Materialien eingesetzt werden.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt schematisch in
- - Fig. 1: den Verfahrensablauf bei der Verbindung von zwei Substraten mittels Vorhangguss im Querschnitt;
- - Fig. 2: das zum Vorhangguss von Fig. 1 alternative Gleitbeschichtungsverfahren im Querschnitt;
- - Fig. 3: einen Querschnitt durch ein Detail von Fig. 1 nach deren Linie I-I;
- - Fig. 4: einen Querschnitt durch ein Detail von Fig. 1 nach deren Linie II-II;
- - Fig. 5: einen Querschnitt durch ein weiteres mittels Vorhangguss- oder Gleitschichtverfahren herstellbares Laminat.

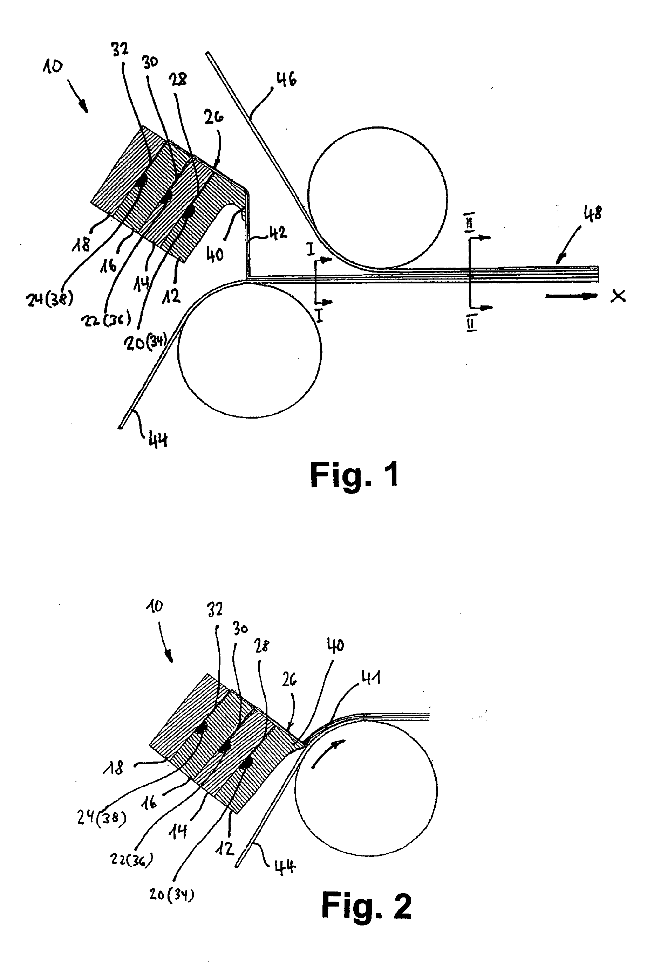

Eine in Fig. 1 gezeigte Düsenanordnung 10 einer nicht näher dargestellten Gleitflächen-Beschichtungsvorrichtung für eine Flüssigfilm-Beschichtung mittels Vorhangguss weist vier einander anliegende Module 12, 14, 16, 18 auf. Die aneinandergereihten Module 12, 14, 16, 18 bilden insgesamt drei quer zu einer Bahnlaufrichtung x angeordnete Verteilkammern 20, 22, 24 mit je einem an einer Düsengleitfläche 26 endenden Austrittsschlitz 28, 30, 32. Die Verteilkammern 20, 22, 24 werden entsprechend der gewünschten Austrittsmenge an der Düsengleitfläche 26 separat und dosiert mit Beschichtungsfluiden 34 (Klebstoff), 36 (funktionelle Zwischenschicht), 38 (Klebstoff) versorgt.

Die aus den Verteilkammern 20, 22, 24 über die Austrittsschlitze 28, 30, 32 an der Düsengleitfläche 26 austretenden und in Schichten übereinandergelegten Beschichtungsfluide 34, 36, 38 laufen als dreischichtiger Flüssigkeitsfilm 42 über eine am Modul 12 angeordnete Ablaufkante 40 und bilden einen frei fallenden Vorhang.

Der aus den Beschichtungsfluiden 34, 36, 38 aufgebaute dreischichtige Flüssigkeitsfilm 42 trifft im wesentlichen senkrecht auf eine sich in Laufrichtung x bewegende erste Substratbahn 44.

Fig. 2 zeigt eine Düsenanordnung 10 mit einem im wesentlichen gleichen Aufbau wie die Düsenanordnung von Fig. 1, wobei die Ablaufkante 40 zur Durchführung des Gleitbeschichtungsverfahrens angepasst ist. Der dreischichtige Flüssigkeitsfilm 41 gleitet hier von der Ablaufkante 40 direkt auf die an der Ablaufkante 40 vorbeigeführte Substratbahn 44.

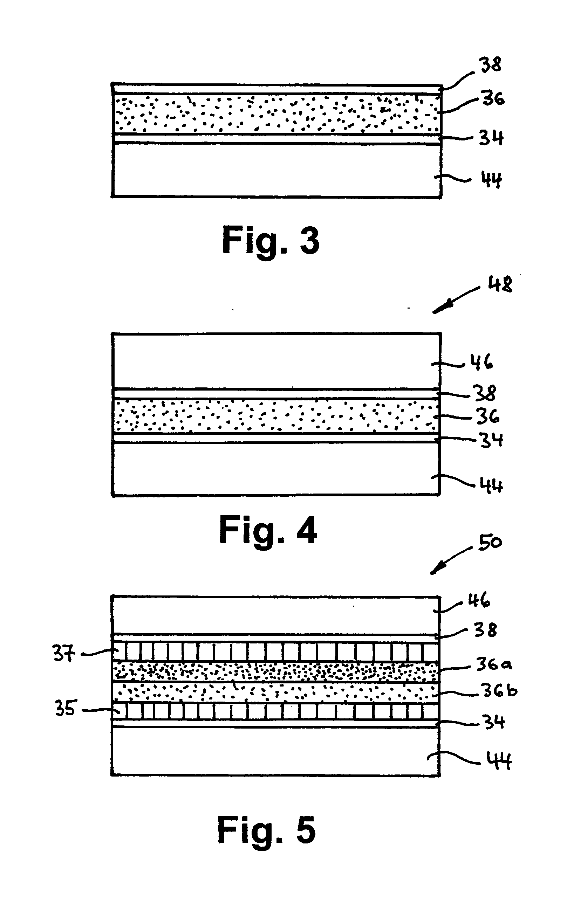

Der Flüssigkeitsfilm 42 von Fig. 1 bildet auf der Oberfläche der ersten Substratbahn 44 die in Fig. 3 gezeigte fluide Beschichtung.

Der mit den Beschichtungsfluiden 34, 36, 38 beschichteten ersten Substratbahn 44 wird gemäss Fig. 1 in Bandlaufrichtung x eine zweite Substratbahn 46 zugeführt und mit der beschichteten ersten Substratbahn 44 zu einem in Fig. 4 gezeigten Laminat 48 verklebt.

Mit dem in Fig. 1 dargestellten Verfahrensablauf kann z. B. ein Laminat aus einem PET-Film und einem PE-Film mit einer zwischen den beiden Filmen angeordneten Barriereschicht aus PVOH wie folgt gefertigt werden. Ein PET-Film wird mit einem dreischichtigen Flüssigkeitsfilm beschichtet, und der beschichtete PET-Film wird anschliessend mit einem PE-Film verklebt. Der dreischichtige Flüssigkeitsfilm besteht aus einer ersten, auf die PET-Oberfläche optimierten Klebstoffschicht auf Urethan-, Acrylat- oder Epoxybasis, einer mittleren Barriereschicht aus PVOH und aus einer zweiten, auf die PE-Oberfläche optimierten Klebstoffschicht auf Urethan-, Acrylat- oder Epoxybasis.

Fig. 5 zeigt ein anderes Beispiel eines mittels Vorhangguss- oder Gleitschichtverfahren herstellbaren Laminates 50 mit Substraten 44, 46 als Aussenschichten, die mittels eines sechsschichtigen Flüssigkeitsfilms zum Laminat 50 mit innenliegender Barriereschicht verbunden werden. Der sechsschichtige Flüssigfilm weist zwei aussenliegende Klebstoffschichten 34, 38 auf, die jeweils auf die Oberfläche des angrenzenden Substrats optimiert sind. Auf die Klebstoffschichten 34, 38 folgt je eine Zwischenschicht 25, 37 als Füllmasse. Zwischen den Zwischenschichten 35, 37 befindet sich eine aus zwei separaten Schichten 36a, 36b bestehende, zwei verschiedenen Funktionen aufweisende Barriereschicht.

## Patentansprüche

1. Verfahren zur Herstellung eines Laminates (48) aus zwei über Klebstoffschichten (34, 38) miteinander verbundenen folienförmigen Substraten (44, 46) als Aussenschichten und wenigstens einer funktionellen Zwischenschicht (36),
**dadurch gekennzeichnet, dass**
ein erstes Substrat (44) über eine Flüssigfilm-Beschichtung mittels Vorhangguss oder Gleitbeschichtung mit einem mehrschichtigen, wenigstens zwei aussenliegende Klebstoffschichten (34, 38) und wenigstens eine funktionelle Zwischenschicht (36) sowie optional wenigstens eine weitere Zwischenschicht (35, 37) umfassenden Flüssigfilm (42) beschichtet und nachfolgend mit dem zweiten Substrat (46) verbunden wird.

2. Verfahren nach Anspruch 1, **dadurch gekennzeichnet, dass** die funktionelle/n Zwischenschicht/en (36) wenigstens eine Barriereeigenschaft ausgewählt aus der Gruppe der Diffusionsdurchtrittshemmung für Sauerstoff, Kohlendioxid, Aromastoffe und/oder Wasserdampf, der Transmissionshemmung für UV-Strahlen und der Scavengerfunktion zur Absorption von Sauerstoff, Wasserdampf und Aromastoffen aufweist/aufweisen.

3. Verfahren nach Anspruch 2, **dadurch gekennzeichnet, dass** die funktionelle/n Zwischenschicht/en (36) mit Barrierewirkung gegen den Durchtritt von Sauerstoff, Kohlendioxid, Aromastoffen und/oder Wasserdampf auf der Basis von PVOH, EVOH, vernetzenden Acrylaten, Polyamiden, PVDC, Epoxy-Amin, Fluorpolymer, Nanocomposites und/oder Schichtsilikaten aufgebaut sind.

4. Verfahren nach Anspruch 2, **dadurch gekennzeichnet, dass** die funktionelle/n Zwischenschicht/en (36) mit Barrierewirkung gegen die Durchlässigkeit von UV-Strahlen organische Absorbern und/oder anorganischen Partikel enthalten.

5. Verfahren nach Anspruch 2, **dadurch gekennzeichnet, dass** die funktionelle/n Zwischenschicht/en (36) mit Scavengerfunktion anorganische oder organische Füllstoffe oder Molekularsiebe als Absorbermaterial enthalten.

6. Verfahren nach einem der Ansprüche 1 bis 5, **dadurch gekennzeichnet, dass** jede der Klebstoffschichten (34, 38) auf die Oberfläche des angrenzenden Substrats (44, 46) funktionell optimiert ist.

7. Verfahren nach einem der Ansprüche 1 bis 6, **dadurch gekennzeichnet, dass** der Flüssigfilm wenigstens eine weitere Zwischenschicht (35, 37) als zusätzliches Schichtvolumen aufweist.

8. Verfahren nach Anspruch 7, **dadurch gekennzeichnet, dass** die Dicke der Klebstoffschichten (34, 38) geringer ist als die Dicke der als Schichtvolumen dienenden Zwischenschicht (35, 37).

9. Verfahren nach Anspruch 8, **dadurch gekennzeichnet, dass** die Dicke der Klebstoffschichten (34, 38) 1 bis 30 %, vorzugsweise 1 bis 10 %, der Dicke der als Schichtvolumen dienenden Zwischenschicht (35, 37) beträgt.

10. Verfahren nach einem der Ansprüche 1 bis 9, **dadurch gekennzeichnet, dass** die Klebstoffschichten (34, 38) aus Klebstoffen auf Urethanbasis, insbesondere Polyether-, Polyester- oder Polybutadienpolyole, Acrylat- oder Epoxybasis oder aus Kombinationen der genannten Klebstoffe zusammengesetzt sind.

11. Verfahren nach Anspruch 7, **dadurch gekennzeichnet, dass** die als zusätzliches Schichtvolumen dienende Zwischenschicht (35, 37) aus einem Klebstoff auf Urethanbasis, insbesondere aus aromatischen oder aliphatischen Isocyanaten, besteht.

12. Verfahren nach einem der Ansprüche 1 bis 11, **dadurch gekennzeichnet, dass** die Schichten (34, 35, 36, 37, 38) des Flüssigfilms lösemittelbasiert, lösemittelfrei oder wasserbasiert sind.

13. Verfahren nach einem der Ansprüche 1 bis 12, **dadurch gekennzeichnet, dass** die Substrate (44, 46) Kunststofffilme, Papier oder eine Kombination aus wenigstens zwei der vorstehend genannten Materialien sind.
